# EUROPEAN PATENT SPECIFICATION

(11) **EP 1 259 108 B1**
(45) Date of publication and mention of the grant of the patent: **04.05.2005**
(21) Application number: 01908482.1
(22) Date of filing: 15.02.2001
(51) Int. Cl.: A01K 61/00

(54) **A DEVICE FOR SORTING OF FISH, PREFERABLY EEL**
VORRICHTUNG ZUM SORTIEREN VON FISCHEN,INBESONDERE VON AALEN
PROCEDE DE TRI DE POISSONS, NOTAMMENT D'ANGUILLES

(30) Priority: 16.02.2000 NO 20000767
(43) Date of publication of application: 27.11.2002
(73) Proprietor: Rekkedal, Arne, 5590 Etne (NO)
(72) Inventor: Rekkedal, Arne, 5590 Etne (NO)
(74) Representative: Onn, Thorsten
(86) International application number: PCT/NO2001/000054
(87) International publication number: WO 2001/060150

(56) References cited:
- WO-A1-94/06281

## Description

The present invention relates to a device for in-tank sorting of fish, preferably eel, in accordance with the preamble of independent claim 1 as already similarly disclosed by WO-A-94/06281.

The farming of eel in captivity is developing into an interesting business area with great potential. The eel is a catadromous fish (i.e., it lives in both fresh water and salt water) with special characteristics. It has a particularly good ability to pass through physical barriers in order to escape from captivity. In addition there exits a strict ranking order among the individuals, determined by size among other factors, which can easily give rise to a situation where the smallest individuals in the same aquaculture environment are not provided with sufficient feed because this goes to the largest individuals, or that the smallest individuals do not gain access to the feed even though there is an excess of feed particles. The smaller individuals are punished by having their tails bitten by the larger eels, which leads in turn to injury of the mucous layer of the epidermis in the smaller individuals, which can precipitate both infection and fungal attack. Eel must therefore be sorted frequently, preferably every third to fifth week or more often. All eel used today in farming are wild eel that have been caught. This is the case since at present it is not possible to hatch spawn in captivity because the reproduction process of the eel is not known. Genetic material and growth is thus different for the different individuals. In addition, the eel has a special tendency to cluster together in groups of many individuals, and, unlike the salmon, it is able to swim backwards.

Owing to the said ranking order, different potential for rapid growth, crowding together at the feed site, and the fact that the eel must "be purged", - i.e., it must not be given any nutrition the last days before slaughter to avoid the fish meat having an unpleasant and unwanted taste - it is necessary during cultivation to separate fish of different sizes into different delimited units, whether these are different pens or sections of pens in salt water or different tanks or sections of tanks in fresh water. Although other fish sorting methods are previously known in other branches of the fish farming industry, it has to date, because of the eel's special characteristics, been the prevailing practice in eel farming to sort either by hand or by using a grate-based sorting machine. This grate-based sorting machine functions in that the eel are placed in the upper part of the machine, and then fall under the effect of gravity through a so-called tubular grate, whose tubes are spaced apart at different intervals, providing that the size of the eel is such that it can pass between the tubes. The eel then passes out of the machine and into a tank containing eel of the same size. This is a method that causes the eel a good deal of harmful stress, which then means that some time will pass before the eel will gain take nourishment and that in the meanwhile it may lose weight. In addition, machines of this kind having a satisfactory capacity are quite expensive, costing somewhere in the region of about NOK 90,000 to about NOK 450,000.

To remedy the aforementioned and other deficiencies and drawbacks, there is provided according to the invention a device for in-tank sorting of fish. The term "in-tank" is used to mean that the fish are sorted through their own volitional movement between different tanks or physically separate parts of tanks without being removed from their daily environment during the sorting. This is a cost-efficient sorting method which at the same time gives the fish better environmental conditions because there is less stress. Since in recent years there has been increasing focus on the improvement of environmental conditions for animals in captivity in general, there is also a strong possibility that in the future a regulatory framework will be introduced which in practice will call for the use of in-tank sorting methods for fish such as the method described herein or similar methods.

The sorting device according to the present invention consists of an entrance for the fish which in an advantageous embodiment comprises a disc having several through holes of different diameters which is rotatably mounted on a plate having corresponding holes which are at least the same size as the largest hole or holes in the rotatable disc. The rotatable disc can on rotation be adjusted for optional passage of fish of different sizes, where the open hole diameter of the disc determines the maximum size of fish that can pass. The exit consists of a flexible water-permeable material in the form of a funnel, preferably a net having suitable mesh width, which at the end facing the entrance is snugly arranged against the entrance or an extension thereof, and which at the other end has a closing device which is opened when the fish press against the end of the funnel from the inside. Because a load against the inside of the funnel is necessary if the fish are to be able to pass through the closing device, the fish will be prevented from passing in the opposite direction, i.e., in through the exit.

In a preferred embodiment, the closing device consists of two spring bars which via wires are connected to the opposite ends of the periphery of the exit opening and where both bars can be pre-tensioned in a closed position, so that in this position a closed slot is formed. As previously mentioned, the fish can pass through this slot by pushing against the end of the funnel, of which the slot forms a part, from the inside of the funnel. When the fish press against the end of the funnel, the bars will make an elastic movement in the direction of the opening, thereby opening the slot sufficiently to enable the fish to swim through.

Alternatively, the closing means can be made in the form of an elastic part arranged along the periphery of the exit opening, and where non-resilient bars or the like, which are attached to the opening via wires or the like, serve only to keep the flexible material extended in a funnel form. The elastic part will then ensure that the opening is closed when fish do not press thereon from the inside of the funnel.

One of the advantages of the first-mentioned solution, where the closing means comprises spring bars, is that each of these will make an elastic movement for each fish that passes, so that a mechanical or electronic fish counter optionally can count each fish that passes by registering these movements. With an electronic fish counter, the elastic movement of the bars can, e.g., result in an electric circuit being connected or broken for each fish that passes. An infrared-based fish counter that is known per se may also be used.

In one embodiment, the sorting device according to the present invention can be arranged in a pipe between two different tanks, and in another embodiment it can be arranged in a dividing wall between two separate sections of the same tank.

In the case of the first-mentioned embodiment, the above-described entrance and exit can be arranged transverse to the longitudinal direction of a tubular unit that forms a part of a connection pipe, where the entrance and the exit are advantageously spaced apart and with an inspection hatch therebetween. Tests have shown that in such pipes it is important to use a water current in the eel's direction of travel, so that the eel must swim with the current. Accordingly, the connection point for a water pipe that generates this water current should be placed close to the downstream side of the entrance to the sorting device, and oriented is such manner that the water current will follow the direction of travel as quickly as possible. The eel will thus be "flushed" through the pipe containing the sorting device without having any chance of swimming backwards or clustering together in groups. A direction of travel between the tanks that is as horizontal as possible will also help to ensure that the water in the pipe does not develop a flow in the wrong (opposite) direction.

In the case of the last-mentioned embodiment, the entrance and exit are arranged adjacent in that the rotating disc and the funnel comprising the closing means are advantageously arranged on either side of a previously described plate that forms a part of the dividing wall between the tank sections.

The last-mentioned embodiment can advantageously be used in combination with a so-called longitudinal flow tank, where one and the same tank is divided into different tank sections in the longitudinal direction of the tank, which constitutes the main flow direction. Because the dividing walls of the tank are advantageously in direct fluid connection at the bottom edge, the water level in the tank sections will always be the same, which means in turn that there will be a hydrostatic equilibrium between the dividing walls. A hydrostatic equilibrium between the tank sections means in turn that the dividing walls of the tank and the plate of the sorting device as a part thereof may be made of a thin material or a material of little rigidity, e.g., a plastics material.

In a longitudinal flow tank there will be flow between the tank sections, and feeding can thus be carried out at one (upstream) end of the tank. This method also ensures that the feed particles have a longer migration route, i.e., a longer residence time in the facility units and less waste. Furthermore, it is possible to give supplementary feed to each individual tank section according to need. It is envisioned that this method could be used, for instance, after the conversion of barns on farms where there is no longer a basis for farming ordinary livestock, or where for other reasons there is a desire to change business base. The barn can then be converted into a "fish-barn" by building a longitudinal flow tank into the barn floor as a rectangular depression, and where the outer walls and the bottom thereof can advantageously be cast in concrete. Alternatively, existing fertiliser cellars can be used as longitudinal flow tanks. Eel require a culturing temperature of about 24°C for optimal growth and well-being. To maintain the energy and water consumption at a low level, it is therefore expedient that the water in the aquaculture facility should be recycled after treatment.

Lastly, in order to illustrate the eel's capacity for escape mention can be made of the fact that the applicant has conducted tests in a prototype for in-tank sorting, and when using the sorting device according to the present invention, the results were as follows: One eel set out in a tank took about 30 seconds to move through a 2.5 metre long pipe to another tank. In another test involving sorting through a dividing wall between two tank halves, 98% of a total of about 250 individuals had sorted themselves after three hours.

The present invention is characterised by the features disclosed in independent claim 1.

Advantageous embodiments of the invention are disclosed in the dependent claims.

The present application will be described in more detail below, with reference to the attached drawings where the same or similar parts have the same reference numerals, and wherein:
Figures 1a, b and c show a first embodiment of the sorting device according to the present invention, seen from in front, from the side and from above respectively.
Figure 2 is a sectional side view of a second embodiment of the invention.
Figure 3 is a schematic diagram of a longitudinal flow tank, seen from above, and with the position of sorting devices in the dividing walls of the type shown in Fig. 1 indicated by circles.

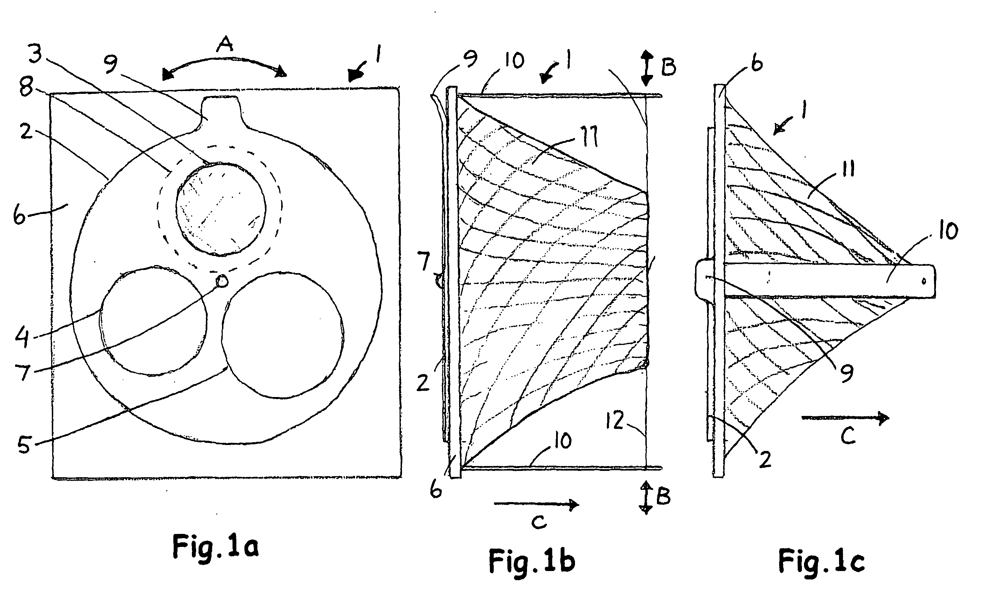

Figure 1a shows a first embodiment of a sorting device 1 according to the present invention for sorting between different tank sections, seen from in front, i.e., from the entrance. A disc 2 provided with through holes 3, 4, 5 of different diameters for determining the maximum size of the passing fish is rotatably mounted on a plate 6 about a centrally arranged support 7, e.g., in the form of a screw-bolt or rivet connection. In the plate 6 there is provided a through hole 8 (indicated in broken lines) having a diameter which is at least as large as the largest hole 5 in the rotatable disc 2, and which is successively aligned with each of the holes 3, 4, 5 as the disc 2 rotates, so that the fish are able to pass through the aligned holes and into the sorting device 1. The arrow A shows more clearly how the disc 2 rotates on the plate 6. Rotation can be effected by directly and manually by turning the illustrated tab 9 which is advantageously arranged in the rim of the disc 2, or alternatively by means of a non-illustrated transmission means. The plate 6 may be designed as an integral part of the dividing wall between two tank sections, or secured to a suitably shaped hole therein.

Figures 1b and 1c show the aforementioned sorting device from the side and from above respectively. A closing means in the form of two spring bars 10 is rigidly secured to the plate 6 at one end, and at the other end stretches out an essentially funnel-shaped net 11 with the aid of wires 12, so that a slot 13 is formed which is opened sufficiently to enable the fish to pass when it presses against the slot 13 from the inside of the funnel-shaped net 11. The elastic movement of the bars 10 is indicated by the arrows B, and the direction of travel of the fish is indicated by the arrow C. The net 11 is snugly arranged against the plate 6 so that the fish are only able to pass out of the sorting device through the slot 13, and thus are prevented from passing in the opposite direction, i.e., into the sorting device 1 through the slot 13. As previously described, a non-illustrated fish counter can register the number of fish that pass by on the basis of the movement of the bars 10.

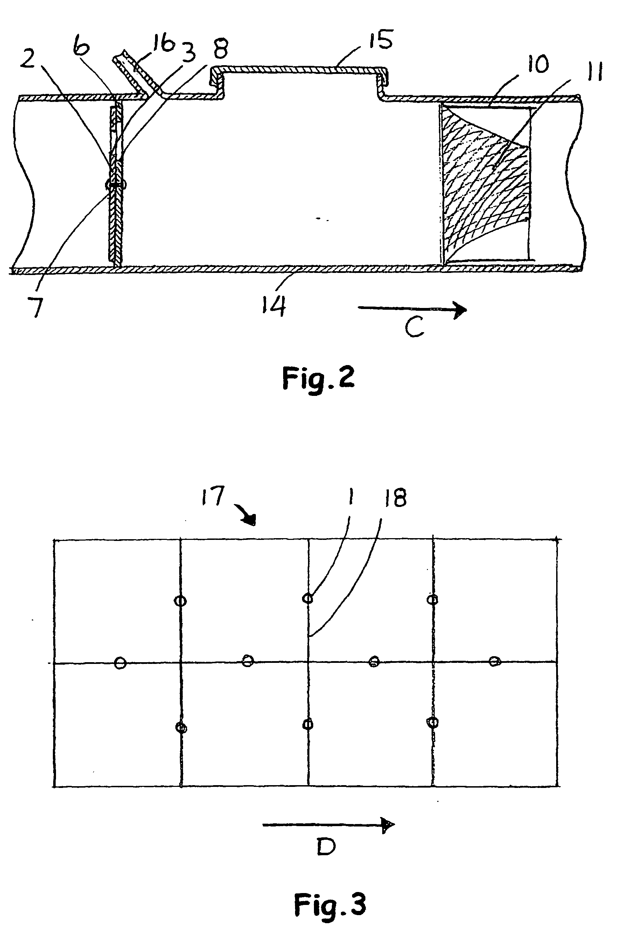

Figure 2 shows a second embodiment of the present invention, arranged in a pipe 14 between two different tanks. The entrance to the sorting device 1, comprising the rotatable disc 2 and the plate 6 provided with holes 3, 4, 5, 8 is arranged at a distance from the exit, comprising the funnel-shaped net 11 and the bars 10, and where an inspection hatch 15, advantageously provided in the form of a removable cover for access to the area of the pipe between the entrance and the exit, is arranged therebetween. The entrance and exit are arranged transverse to the longitudinal direction of the pipe 14, and a line 16 for the supply of flushing water (advantageously in the form of recycled water) is arranged close to the downstream side of the entrance to the sorting device 1, and at such an angle that water quickly assumes a flow direction in the direction of travel C of the fish.

Figure 3 is a schematic diagram of a longitudinal flow tank, seen from above, and with the location of sorting devices 1 in the dividing walls of the type shown in Figure I marked by circles. The tank is divided into tank sections for fish of different sizes by dividing walls 18, and the fish sort themselves by passing through the sorting devices 1. The size of the individual tank sections can be adjusted by moving the dividing walls 18. The position of the tank sections advantageously follows the longitudinal flow direction D of the water flow through the tank 17, and the fish larvae can advantageously be released in the upstream end of the tank 17 and grow until they are ready for slaughter while moving in the same direction as the water flow. However, for eel that are to be purged before slaughter, a lower water temperature is required, and these eel must therefore be kept in a separate, delimited tank (not shown). This tank can advantageously be connected to the longitudinal flow tank 17 via a sorting device 1 that is arranged in a pipe 14, shown in Figure 2.

In the exemplary embodiments described above, the holes in the device according to the present invention are described in that they have a given diameter, and that a given number of holes have been described. However, within the scope of the invention it is possible to use holes of other geometries and a different number of holes.

## Claims

1. A device for in-tank sorting of fish, preferably eel, either between separate tanks, between separate sections of the same tank or between different pens, **characterised in that** it comprises an entrance having one or more openings (3, 4, 5) for sorting according to size the fish that enter the device (1), and an exit having a closing device comprising a substantially funnel-shaped and water-permeable material (11) that allows the passage of fish from the exit of the device (1), and which prevents fish from entering the sorting device (1) through the exit.

2. A device according to claim 1, **characterised in that**:
- the entrance comprises a disc (2) having openings (3, 4, 5) of different sizes which is rotatably arranged on a plate (6) having one opening (8) that is at least as large as the largest opening (5) in the disc (2) and which on rotation of the disc can be aligned with each of the holes (3, 4, 5) for optionally adjusting the maximum size of the fish that can pass into the device ( I ); and that
- the exit comprises a flexible water-permeable material, preferably a net having a suitable mesh width, which is stretched out in the form of a funnel (11) and where the end of the funnel (11) facing the entrance is snugly fitted thereto or to an extension thereof, and where the other, narrow end of the funnel (11) is made as part of the closing device, where the fish by pressing against the inside of the funnel (11) can pass through an opening (13) therein in a direction (C) out of the sorting device (1).

3. A device according to claims 1-2, **characterised in that** the closing device is provided in the form of spring bars (10) which either directly or via wires (12) are connected to the opposite ends of the periphery of the exit, thereby forming a slot (13) which is closed when fish do not press against the end of the funnel (11) from the inside thereof

4. A device according to claims 1-2, **characterised in that** the closing device is provided as an elastic part in the narrow end of the funnel (11), thus forming an opening (13) which is closed when fish do not press against the end of the funnel (11) from the inside thereof

5. A device according to claim 3, **characterised in that** one or more of the spring bars (10) are connected to an electronic or mechanical counter device which by registering the number of elastic movements of at least one of the bars (10) can count the number of fish that pass though the sorting device (1).

6. A device according to one or more of claims 1 to 4, **characterised in that** the plate (6) forms a part of the dividing wall (18) in a longitudinal flow tank (17), either by being an integral part of the dividing wall (18) or by being snugly fitted in a suitable opening in the dividing wall.

7. A device according to one or more or claims 1 to 4, **characterised in that** for sorting fish between two tanks the entrance and the exit are arranged transverse to the longitudinal direction of a pipe (14), that a line (16) for the supply of flushing water is advantageously arranged close to the downstream side of the entrance to the sorting device (1), and at an angle such that the water flow from the line (16) quickly assumes the same direction of movement (C) as the fish through the pipe.

8. A device according to claim 7, **characterised in that** the entrance and the exit are spaced apart in the longitudinal direction of the pipe (14), and that an inspection hatch (15) is advantageously placed between the entrance and the exit, where the inspection hatch (15) is advantageously provided in the form of a removable cover placed sealingly against the pipe (14).

## Patentansprüche

1. Vorrichtung zum Sortieren im Becken von Fischen, vorzugsweise Aalen, entweder zwischen getrennten Becken, zwischen getrennten Abschnitten des gleichen Beckens oder zwischen unterschiedlichen Gehegen, **dadurch gekennzeichnet, dass** sie einen Eingang mit einer oder mehreren Öffnungen (3, 4, 5) zum grössenmässigen Sortieren der in die Vorrichtung (1) gelangenden Fische aufweist, sowie einen Ausgang mit einer Schliessvorrichtung aus einem im wesentlichen trichterförmigen, wasserdurchlässigen Material (11), das den Fischen gestattet, den Ausgang der Vorrichtung (1) zu passieren und verhindert, dass Fische durch den Ausgang in die Sortiervorrichtung (1) gelangen.

2. Vorrichtung nach Anspruch 1, **dadurch gekennzeichnet, dass**:
- der Eingang eine Scheibe (2) mit Öffnungen (3, 4, 5) unterschiedlicher Grösse aufweist, welche drehbar auf einer Platte (6) mit einer Öffnung (8) angebracht ist, die mindestens so gross ist wie die grösste Öffnung (5) in der Scheibe (2), und die durch Drehen der Scheibe mit einem beliebigen Loch (3, 4, 5) ausrichtbar ist, um wahlweise die maximale Grösse der Fische einzustellen, die in die Vorrichtung (1) gelangen können; und dass
- der Ausgang aus einem flexiblen, wasserdurchlässigen Material besteht, vorzugsweise aus einem Netz mit geeigneter Maschenweite, welches in Form eines Trichters (11) aufgespannt ist, wobei das dem Eingang gegenüberliegende Ende des Trichters (11) eng an diesem oder an einer Verlängerung desselben anliegt und das andere, enge Ende des Trichters (11) als Teil der Schliessvorrichtung ausgebildet ist, und wobei die Fische, wenn sie gegen die Innenseite des Trichters (11) drücken, durch eine Öffnung (13) desselben in einer Richtung (C) aus der Sortiervorrichtung (1) hinausgelangen können.

3. Vorrichtung nach den Ansprüchen 1-2, **dadurch gekennzeichnet, dass** die Schliessvorrichtung in Form von Federstangen (10) ausgebildet ist, welche entweder direkt oder über Drähte (12) mit den gegenüberliegenden Enden des Umfangs des Ausgangs verbunden sind und damit einen Spalt (13) bilden, der geschlossen ist, solange keine Fische von innen gegen das Ende des Trichters (11) drücken.

4. Vorrichtung nach den Ansprüchen 1-2, **dadurch gekennzeichnet, dass** die Schliessvorrichtung als elastischer Teil im engen Ende des Trichters (11) ausgebildet ist und so eine Öffnung (13) bildet, die geschlossen ist, solange keine Fische von innen gegen das Ende des Trichters (11) drücken.

5. Vorrichtung nach Anspruch 3, **dadurch gekennzeichnet, dass** eine oder mehrere Federstangen (10) mit einer elektronischen oder mechanischen Zählvorrichtung verbunden sind, welche durch Erfassung der Anzahl elastischer Bewegungen mindestens einer der Stangen (10) die Anzahl der die Sortieranlage (1) passierenden Fische zu zählen gestattet.

6. Vorrichtung nach einem oder mehreren der Ansprüche 1 bis 4, **dadurch gekennzeichnet, dass** die Platte (6) einen Teil der Trennwand (18) eines Längsflussbeckens (17) entweder als integraler Bestandteil der Trennwand (18) oder eingepasst in eine geeignete Öffnung der Trennwand bildet.

7. Vorrichtung nach einem oder mehreren der Ansprüche 1 bis 4, **dadurch gekennzeichnet, dass** zum Sortieren von Fischen zwischen zwei Becken der Eingang und der Ausgang quer zur Längsrichtung eines Rohrs (14) angeordnet sind, dass eine Leitung (16) zur Zufuhr von Spülwasser vorzugsweise nach der Sortiervorrichtung (1) in der Nähe derselben angeordnet ist, und zwar in einem solchen Winkel, dass der Wasserstrom aus der Leitung (16) schnell die Bewegungsrichtung (C) der Fische durch das Rohr annimmt.

8. Vorrichtung nach Anspruch 7, **dadurch gekennzeichnet, dass** der Eingang und der Ausgang in Längsrichtung des Rohrs (14) voneinander beabstandet sind, und dass zwischen dem Eingang und dem Ausgang vorzugsweise eine Inspektionsluke (15) angeordnet ist, wobei die Inspektionsluke (15) vorzugsweise als dicht am Rohr (14) angebrachter abnehmbarer Deckel ausgebildet ist.

## Revendications

1. Dispositif de tri en bassin de poissons, préférablement d'anguilles, soit entre bassins séparés, entre sections séparées du même bassin ou entre différents enclos, **caractérisé en ce qu'**il comprend une entrée ayant une ou plusieurs ouvertures (3, 4, 5) pour le tri selon la taille des poissons qui entrent dans le dispositif (1), et une sortie munie d'un dispositif de fermeture comprenant un matériau (11) substantiellement en forme d'entonnoir et perméable à l'eau qui permet le passage de poissons hors de la sortie du dispositif (1) et qui empêche l'entrée de poissons dans le dispositif de tri (1) par la sortie.

2. Dispositif selon la revendication 1, **caractérisé en ce que**:
- l'entrée comprend un disque (2) muni d'ouvertures (3, 4, 5) de différentes tailles, lequel est agencé de manière rotative sur une plaque (6) munie d'une ouverture (8) qui est au moins aussi grande que la plus grande ouverture (5) dans le disque (2) et qui peut être alignée par une rotation du disque sur l'un quelconque des trous (3, 4, 5) afin de définir sélectivement la taille maximum des poissons qui peuvent entrer dans le dispositif (1); et que
- la sortie comprend un matériau flexible et perméable à l'eau, préférablement un filet ayant une largeur de maille appropriée, lequel est déployé en forme d'entonnoir (11), l'extrémité de l'entonnoir (11) en regard de l'entrée étant étroitement ajustée sur celle-ci ou sur un prolongement de celle-ci, et l'autre extrémité étroite de l'entonnoir (11) étant formée comme une partie du dispositif de fermeture, les poissons pouvant passer, en pressant contre l'intérieur de l'entonnoir (11), par une ouverture (13) de celle-ci dans une direction (C) hors du dispositif de tri (1).

3. Dispositif selon les revendications 1-2, **caractérisé en ce que** le dispositif de fermeture est réalisé sous forme de barres à ressort (10) reliées, directement ou par l'intermédiaire de fils de fer (12), aux extrémités opposées de la périphérie de la sortie, formant ainsi une fente (13) qui est fermée tant que les poissons ne pressent pas contre l'extrémité de l'entonnoir (11) depuis l'intérieur de celui-ci.

4. Dispositif selon les revendications 1-2, **caractérisé en ce que** le dispositif de fermeture est réalisé sous forme d'un élément élastique dans l'extrémité étroite de l'entonnoir (11), formant ainsi une ouverture (13) qui est fermée tant que les poissons ne pressent pas contre l'extrémité de l'entonnoir (11) depuis l'intérieur de celui-ci.

5. Dispositif selon la revendication 3, **caractérisé en ce que** l'une ou plusieurs des barres à ressort (10) sont reliées à un dispositif compteur électronique ou mécanique qui, en enregistrant le nombre de mouvements élastiques d'au moins une des barres (10), permet de compter le nombre de poissons qui passent par le dispositif de tri (1).

6. Dispositif selon l'une ou plusieurs des revendications 1 à 4, **caractérisé en ce que** la plaque (6) fait partie de la paroi de séparation (18) d'un bassin à flux longitudinal (17), soit en tant que partie intégrante de la paroi de séparation (18), ou par ajustage affleuré dans une ouverture appropriée dans la paroi de séparation.

7. Dispositif selon l'une ou plusieurs des revendications 1 à 4, **caractérisé en ce que** pour le tri de poissons entre deux bassins, l'entrée et la sortie sont agencées transversalement à la direction longitudinale d'un tuyau (14), qu'une conduite (16) d'alimentation d'eau de rinçage est avantageusement agencée à proximité du côté en aval de l'entrée du dispositif de tri (1) et à un angle tel que le flux d'eau en provenance de la conduite (16) adopte rapidement la même direction de mouvement (C) dans le tuyau que les poissons.

8. Dispositif selon la revendication 7, **caractérisé en ce que** l'entrée et la sortie sont espacées en direction longitudinale du tuyau (14), et qu'une porte de visite (15) est avantageusement placée entre l'entrée et la sortie, la porte de visite (15) étant avantageusement réalisée sous forme d'un couvercle amovible apposé de manière étanche sur le tuyau (14).
